# FASCICULE DE BREVET EUROPEEN

(11) **EP 0 802 547 B1**
(45) Date de publication et mention de la délivrance du brevet: **22.11.2000**
(21) Numéro de dépôt: 97110618.2
(22) Date de dépôt: 02.05.1995
(51) Int. Cl.: H01H 3/02, H01H 3/16

(54) **Dispositif de sécurité pour un élément électrique mobile et barbeque électrique équipé d'un tel dispositif**
Sicherheitsvorrichtung für ein elektrisches bewegliches Bauelement und Grill mit einer derartigen Vorrichtung
Security device for a mobile electric element and barbecue with such device

(30) Priorité: 06.05.1994 FR 9405618
(43) Date de publication de la demande: 22.10.1997
(62) Demande divisionnaire de: 95401002.1
(73) Titulaire: SEB S.A., 69130 Ecully (FR)
(72) Inventeur: Betend-Bon, Alain, 74000 Annecy (FR)
(74) Mandataire: Keib, Gérard

(56) Documents cités:
- DE-A- 3 926 098
- FR-A- 891 212
- FR-A- 2 069 677

## Description

La présente invention concerne un dispositif de sécurité pour un élément électrique mobile.

Elle concerne également un barbecue électrique comprenant une résistance électrique équipé d'un tel dispositif.

De nombreux appareils possèdent des parties électriques qui sont amovibles afin de faciliter le nettoyage du corps de l'appareil. Il est important, pour assurer la sécurité de l'utilisateur, d'imposer la coupure de l'alimentation électrique de ces parties amovibles lorsqu'elles ne sont pas situées dans leur position normale d'utilisation. Cette exigence implique la mise en place d'un dispositif de sécurité qui empêche l'utilisateur de mettre en marche l'appareil lorsque les éléments électriques ne sont pas situés sur le corps de l'appareil.

On connaît dans la technique antérieure des dispositifs de sécurité montés entre les moyens d'alimentation en courant électrique et l'interrupteur de commande marche/arrêt des éléments électriques. De tels dispositifs imposent l'utilisation de deux interrupteurs montés en série, chacun de ces interrupteurs étant commandé indépendamment, soit par l'utilisateur, soit par des moyens de détection de la position de l'élément électrique par rapport au corps de l'appareil.

Les dispositifs de sécurité actuels présentent donc l'inconvénient d'être coûteux à réaliser et d'augmenter les risques de panne de l'appareil électrique.

Dans le document FR 2 069 677, un dispositif de sécurité pour un appareil électrique comprend des moyens de commande et des moyens de détection de la position de l'élément électrique adaptés à commander le fonctionnement d'un interrupteur unique. Les moyens de détection comprennent un élément mobile en translation contre une force de rappel élastique maintenant l'élément mobile en saillie de l'appareil électrique.

Un tel élément mobile peut facilement être déplacé, par inadvertance ou intentionnellement, par n'importe quel objet venant en appui sur la partie en saillie de l'élément mobile, autorisant ainsi le fonctionnement de l'élément électrique hors de sa position normale de fonctionnement.

La présente invention a pour objet de résoudre les inconvénients précités et de proposer un dispositif de sécurité peu coûteux tout en assurant une très bonne protection de l'utilisateur.

Le dispositif de sécurité visé par l'invention est prévu pour un élément électrique mobile par rapport à des moyens complémentaires coopérant en fonctionnement avec l'élément électrique dans une position rapprochée, et comprend des moyens de commande du fonctionnement de l'élément électrique entre une position de marche et une position d'arrêt, des moyens de détection de la position rapprochée ou éloignée de l'élément électrique par rapport aux moyens complémentaires, et un interrupteur unique adapté à être actionné entre une position de connexion, dans laquelle l'élément électrique est connecté à des moyens d'alimentation en courant électrique, et une position de déconnexion, dans laquelle l'élément électrique est déconnecté des moyens d'alimentation électrique, l'interrupteur étant actionné en position de déconnexion si lesdits moyens de commande sont en position d'arrêt ou si les moyens de détection détectent la position éloignée de l'élément électrique par rapport aux moyens complémentaires.

Selon l'invention les moyens de détection comprennent une première came pivotée par lesdits moyens complémentaires lorsque l'élément électrique est dans ladite position rapprochée par rapport aux moyens complémentaires, et les moyens de commande comprennent une seconde came, la première came des moyens de détection et la seconde came des moyens de commande étant concentriques et solidaires en rotation autour d'un axe.

Ainsi, grâce à l'invention un seul interrupteur est commandé à la fois par des moyens de commande et par des moyens de détection de la position de l'élément électrique par rapport à cet appareil. La mise en route des moyens électriques ne peut être réalisée que si les moyens de commande sont en position de marche et si l'élément électrique est en position normale d'utilisation.

Le dispositif conforme à l'invention est donc d'une grande sécurité pour l'utilisateur dans la mesure où il est nécessaire d'exercer une double action sur l'interrupteur pour établir la connexion de l'élément électrique avec les moyens d'alimentation en courant électrique.

En outre, l'utilisation d'une came rotative comme moyen de détection rend plus mal aisée toute manipulation accidentelle de ces moyens de détection.

Selon une autre version avantageuse de l'invention, l'interrupteur comprend un contacteur en saillie dans la position de déconnexion et en position escamotée dans la position de connexion. La seconde came vient en appui sur le contacteur afin de déplacer le contacteur en position escamotée, lorsque les moyens de commande sont en position de marche et lorsque les moyens de détection détectent la position rapprochée de l'élément électrique par rapport aux moyens complémentaires.

Les moyens de commande et les moyens de détection actionnent donc un même contacteur.

Selon un autre aspect de l'invention, un barbecue électrique comprend une embase et une résistance électrique montée de manière amovible sur cette embase.

Conformément à l'invention, un dispositif de sécurité tel que décrit ci-dessus équipe la résistance électrique, les moyens complémentaires étant constitués par l'embase.

Par conséquent, dès que la résistance électrique est retirée de l'embase, pour faciliter le nettoyage de celle-ci par exemple, le dispositif de sécurité conforme à l'invention empêche la mise en route de la résistance électrique et protège ainsi parfaitement l'utilisateur.

D'autres avantages et particularités de l'invention apparaîtront encore dans la description ci-après.

Aux dessins annexés donnés à titre d'exemples non limitatifs:
- la figure 1 est une vue en perspective d'un barbecue électrique conforme à l'invention;
- la figure 2 est une vue en perspective d'une résistance électrique équipée d'un dispositif de sécurité conforme à l'invention; et
- la figure 3 est une vue schématique d'un dispositif de sécurité selon un mode de réalisation de l'invention.

Afin de mieux comprendre l'invention, on va décrire l'application du dispositif de sécurité à un barbecue électrique, cet exemple n'étant donné qu'à titre d'illustration.

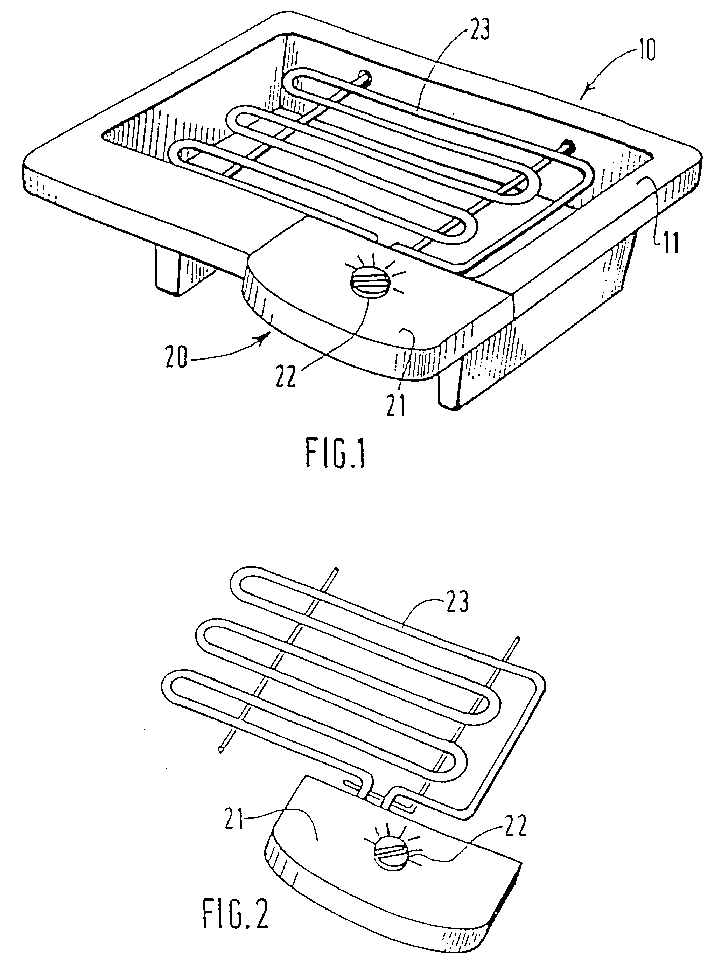

En référence tout d'abord à la figure 1, un barbecue électrique 10 comprend une embase 11 et une résistance électrique 23 montée de manière amovible sur cette embase 11.

Dans un tel appareil, il est avantageux de pouvoir retirer la résistance électrique pour faciliter le nettoyage de l'embase 11.

Un dispositif de sécurité, tel qu'il sera décrit ci-après en détail, équipe la résistance électrique 23. L'ensemble du dispositif de sécurité 20 est logé dans un boîtier 21. Celui-ci peut être en plastique ou en aluminium.

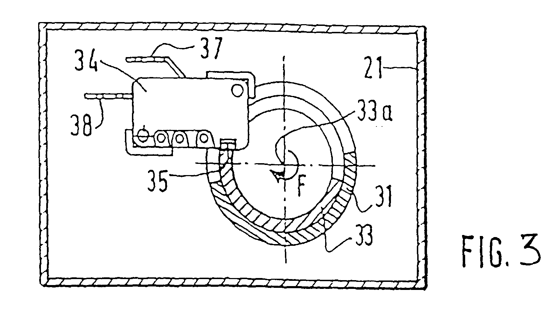

Comme mieux représenté à la figure 2, la résistance électrique 23 et le dispositif de sécurité 20 sont amovibles par rapport au reste de l'appareil et notamment de l'embase 11.

En référence à la figure 3, on va décrire la structure du dispositif de sécurité conforme à l'invention.

Ce dispositif de sécurité comprend des moyens de commande 33 du fonctionnement de l'élément électrique 23 entre une position de marche et une position d'arrêt. Il comprend également des moyens de détection 31 adaptés à détecter la position rapprochée ou éloignée de l'élément électrique 23 par rapport aux moyens complémentaires 11.

Conformément à l'invention, ce dispositif de sécurité comprend un interrupteur unique 34 adapté à être actionné entre une position de connexion et une position de déconnexion.

De manière connue, des conducteurs électriques 37, 38 permettent d'alimenter en courant l'élément électrique à partir d'une source de courant non représentée.

L'interrupteur 34 comprend un contacteur 35 en saillie dans la position de déconnexion et en position escamotée dans la position de connexion.

Le contacteur 35 est maintenu en saillie grâce à un moyen de rappel élastique.

Les moyens complémentaires peuvent être constitués par l'embase 11 du barbecue tel qu'illustré à la figure 1.

Conformément à l'invention, l'interrupteur 34 est adapté à connecter une résistance électrique 23 à des moyens d'alimentation électrique si et seulement si cette résistance est en position de fonctionnement dans l'appareil et les moyens de commande 33 sont en position de marche.

Les moyens de détection 31 sont constitués d'une première came 31 et les moyens de commande 33 sont constitués d'une seconde came 33.

Ces deux cames 31 et 33 sont concentriques et sont solidaires en rotation autour d'un axe 33a.

Une action en rotation sur la came 31 peut être réalisée au moyen d'une rampe solidaire de l'embase 11 du barbecue.

La came 33 est de manière classique solidaire d'un bouton de commande manuelle 22 faisant saillie sur le boîtier 21 dans lequel est logé l'ensemble du dispositif de sécurité 20.

En fonctionnement, lorsque l'utilisateur place l'élément électrique équipé du dispositif de sécurité sur l'embase 11, des moyens complémentaires tels qu'une rampe ont une action sur la came 31 et déplacent les deux cames 31 et 33 d'un angle prédéterminé, de l'ordre de 15° environ dans le sens de la flèche F, à l'encontre de la force de rappel d'un ressort.

Ensuite, lorsque l'utilisateur tourne le bouton de commande 22, également suivant la flèche F, les cames 31 et 33 sont pivotées d'un angle supplémentaire, de sorte que la came 33 vienne en appui sur le contacteur 35 de l'interrupteur 34 et permette ainsi la mise en marche de l'élément électrique.

Lorsque l'élément électrique n'est pas en place sur l'embase 11, la force de rappel du ressort précité entraîne en rotation, dans le sens opposé à la flèche F, les deux cames 31 et 33.

Lorsque l'utilisateur agit sur le bouton de commande solidaire de la came 33, il entraîne en rotation les cames 31 et 33 dans le sens de la flèche F selon un déplacement angulaire maximum.

Ce dernier est prédéterminé de manière à arrêter le déplacement de la came 33 avant que cette dernière ne soit en contact avec le contacteur 35 de l'interrupteur 34.

La mise en marche de l'interrupteur 34 ne peut ainsi être obtenue que lorsqu'il y a une rotation combinée des cames 31 et 33 par l'intermédiaire de la rampe solidaire de l'embase 11 et du bouton de commande.

Dans cette réalisation, aucun élément ne fait saillie du boîtier 21 logeant l'ensemble du dispositif 20, évitant ainsi que l'utilisateur puisse, par mégarde, déplacer la came 31, risquant ainsi de placer l'interrupteur en position de connexion.

Bien entendu, de nombreuses modifications peuvent être apportées à l'exemple de réalisation décrit ci-dessus sans sortir du cadre de l'invention.

Ainsi, le dispositif de sécurité pourrait être monté sur une partie comprenant un moteur électrique par exemple, adapté à entraîner en mouvement des éléments tels que des lames de hachoir, des fouets d'un batteur, ne permettant la mise en route du moteur que si les éléments cités ci-dessus sont en place.

L'élément électrique peut également n'être que mobile entre une position de fonctionnement et une position de non fonctionnement, sans être pour autant amovible.

## Revendications

1. Dispositif de sécurité pour un élément électrique mobile (23) par rapport à des moyens complémentaires (11) coopérant en fonctionnement avec l'élément électrique (23) dans une position rapprochée, comprenant des moyens de commande (33) du fonctionnement de l'élément électrique (23) entre une position de marche et une position d'arrêt, des moyens de détection (31) de la position rapprochée ou éloignée de l'élément électrique (23) par rapport aux moyens complémentaires (11), et un interrupteur unique (34) adapté à être actionné entre une position de connexion, dans laquelle l'élément électrique (23) est connecté à des moyens d'alimentation en courant électrique, et une position de déconnexion, dans laquelle l'élément électrique (23) est déconnecté des moyens d'alimentation électrique, l'interrupteur (34) étant actionné en position de déconnexion si lesdits moyens de commande (33) sont en position d'arrêt ou si les moyens de détection (31) détectent la position éloignée de l'élément électrique (23) par rapport aux moyens complémentaires (11), caractérisé en ce que les moyens de détection comprennent une première came (31) pivotée par lesdits moyens complémentaires (11) lorsque l'élément électrique est dans ladite position rapprochée par rapport aux moyens complémentaires et en ce que les moyens de commande comprennent une seconde came (33), la première came (31) des moyens de détection et la seconde came (33) des moyens de commande étant concentriques et solidaires en rotation autour d'un axe (33a).

2. Dispositif conforme à la revendication 1, caractérisé en ce que la première came (31) et la seconde came (33) sont pivotées d'un angle prédéterminé lorsque l'élément électrique est dans ladite position rapprochée par rapport aux moyens complémentaires (11), et sont pivotées d'un angle supplémentaire lorsque les moyens de commande sont dans ladite position de marche.

3. Dispositif conforme à l'une des revendications 1 ou 2, caractérisé en ce que l'interrupteur (34) comprend un contacteur (35) en saillie dans ladite position de déconnexion et en position escamotée dans ladite position de connexion, ladite seconde came (33) venant en appui sur le contacteur (35) afin de déplacer le contacteur (35) en position escamotée, lorsque les moyens de commande (33) sont en position de marche et lorsque les moyens de détection (31) détectent la position rapprochée de l'élément électrique (23) par rapport aux moyens complémentaires (11).

4. Dispositif conforme à l'une des revendications 1 à 3, caractérisé en ce que l'élément électrique (23) est amovible.

5. Dispositif de sécurité conforme à l'une des revendications 1 à 4, caractérisé en ce qu'il est logé dans un boîtier (21).

6. Dispositif de sécurité conforme à l'une des revendications 1 à 5, caractérisé en ce que l'interrupteur (34) est adapté à connecter ou déconnecter une résistance électrique (23) et des moyens d'alimentation électrique.

7. Barbecue électrique comprenant une embase et une résistance électrique (23) montée de manière amovible sur l'embase (11), caractérisé en ce qu'un dispositif de sécurité (20) conforme à l'une des revendications 1 à 6 équipe la résistance électrique (23), lesdits moyens complémentaires (11) étant constitués par ladite embase (11).

## Patentansprüche

1. Sicherheitsvorrichtung für ein Elektroteil (23), das bezüglich Gegenmitteln (11) bewegbar ist, welche im Betrieb mit dem Elektroteil (23) in einer angenäherten Stellung zusammenwirken, umfassend Mittel zum Steuern (33) des Betriebs des Elektroteils (23) zwischen einer Einschaltstellung und einer Ausschaltstellung, Mittel zum Erfassen (31) der bezüglich der Gegenmittel (11) angenäherten oder entfernten Stellung des Elektroteils (23), und einen Einzelschalter (34), der derart ausgelegt ist, daß er zwischen einer Anschlußstellung, in der das Elektroteil (23) an elektrische Stromversorgungsmittel angeschlossen ist, und einer Trennungsstellung, in der das Elektroteil (23) von den elektrischen Stromversorgungsmitteln getrennt ist, betätigt wird, wobei der Schalter (34) in die Trennungsstellung geschaltet wird, wenn die Steuermittel (33) sich in Ausschaltstellung befinden oder wenn die Erfassungsmittel (31) die bezüglich der Gegenmittel (11) entfernte Stellung des Elektroteils (23) erfassen, dadurch gekennzeichnet, daß die Erfassungsmittel einen ersten Nocken (31) umfassen, der von den Gegenmitteln (11) verschwenkt wird, wenn das Elektroteil sich in der bezüglich der Gegenmittel angenäherten Stellung befindet und daß die Steuermittel einen zweiten Nocken (33) umfassen, wobei der erste Nocken (31) der Erfassungsmittel und der zweite Nocken (33) der Steuermittel konzentrisch und drehfest um eine Achse (33a) angeordnet sind.

2. Vorrichtung nach Anspruch 1, dadurch gekennzeichnet, daß der erste Nocken (31) und der zweite Nocken (33) um einen vorbestimmten Winkel verschwenkt werden, wenn das Elektroteil sich in der bezüglich der Gegenmittel (11) angenäherten Stellung befindet, und um einen zusätzlichen Winkel verschwenkt werden, wenn die Steuermittel sich in der Einschaltstellung befinden.

3. Vorrichtung nach einem der Ansprüche 1 oder 2, dadurch gekennzeichnet, daß der Schalter (34) ein Kontaktteil (35) umfaßt, das in der Trennungsstellung hervorragt und in der Anschlußstellung in versenkter Stellung ist, wobei der zweite Nocken (33) sich an dem Kontaktteil (35) abstützt, um das Kontaktteil (35) in die versenkte Stellung zu verstellen, wenn die Steuermittel (33) in der Einschaltstellung sind und wenn die Erfassungsmittel (31) die bezüglich der Gegenmittel (11) angenäherte Stellung des Elektroteils (23 ) erfassen.

4. Vorrichtung nach einem der Ansprüche 1 bis 3, dadurch gekennzeichnet, daß das Elektroteil (23) abnehmbar ist.

5. Sicherheitsvorrichtung nach einem der Ansprüche 1 bis 4, dadurch gekennzeichnet, daß sie in einem Gehäuse (21) untergebracht ist.

6. Sicherheitsvorrichtung nach einem der Ansprüche 1 bis 5, dadurch gekennzeichnet, daß der Schalter (34) zum Verbinden oder Trennen eines elektrischen Widerstands (23) und Stromversorgungsmitteln ausgelegt ist.

7. Elektrogrill, umfassend eine Fußplatte und einen elektrischen Widerstand (23), der abnehmbar auf der Fußplatte (11) angeordnet ist, dadurch gekennzeichnet, daß der elektrische Widerstand (23) mit einer Sicherheitsvorkehrung (20) nach einem der Ansprüche 1 bis 6 versehen ist, wobei die Gegenmittel (11) aus der Fußplatte (11) bestehen.

## Claims

1. Safety device for an electric element (23) which is movable in relation to complementary means (11), said device cooperating in its operation with the electric element (23) in a proximate position, including means (33) for controlling the operation of the electric element (23) between a working position and a stop position, means (31) for detecting the proximate or distant position of the electric element (23) in relation to the complementary means (11), and a single switch (34) adapted to be operated between a connected position, in which the electric element (23) is connected to means for supplying electric current, and a disconnected position, in which the electric element (23) is disconnected from the electric supply means, the switch (34) being switched into the disconnected position if said control means (33) are in a stop position or if the detection means (31) detect the distant position of the electric element (23) in relation to the complementary means (11), characterized in that the detection means comprise a first cam (31) which is pivoted or turned by said complementary means (11) when the electric element is in said proximate position in relation to the complementary means, and in that the control means comprise a second cam (33), the first cam (31) of the detection means and the second cam (33) of the control means being concentric and integrally movable in rotation around a pin (33a).

2. Device according to Claim 1, characterized in that the first cam (31) and the second cam (33) are turned through a predetermined angle when the electric element is in said proximate position in relation to the complementary means (11), and are turned through a supplementary angle when the control means are in said working position.

3. Device according to one of Claims 1 or 2, characterized in that the switch (34) comprises a contactor (35) which juts out in said disconnected position and is in a retracted position in said connected position, said second cam (33) coming to rest on the contactor (35) so as to displace the contactor (35) into a retracted position, when the control means (33) are in a working position and when the detection means (31) detect the proximate position of the electric element (23) in relation to the complementary means (11).

4. Device according to one of Claims 1 to 3, characterized in that the electric element (23) is detachable.

5. Safety device according to one of Claims 1 to 4, characterized in that it is housed in a casing (21).

6. Safety device according to one of Claims 1 to 5, characterized in that the switch (34) is adapted to connect or disconnect an electric resistance (23) and electric supply means.

7. Electric barbecue comprising a base and an electric resistance (23) which is detachably mounted on the base (11), characterized in that a safety device (20) according to one of Claims 1 to 6 equips the electric resistance (23), said complementary means (11) being made up of said base (11).
